Europäisches Patentamt

European Patent Office

Office européen des brevets

(11) Numéro de publication: **0 266 280**
**A1**

(12) **DEMANDE DE BREVET EUROPEEN**

(21) Numéro de dépôt: 87420259.1

(22) Date de dépôt: 29.09.87

(51) Int. Cl.⁴: **F 28 C 1/02**
**// D06F43/00**

(30) Priorité: 01.10.86 FR 8613968

(43) Date de publication de la demande:
04.05.88 Bulletin 88/18

(84) Etats contractants désignés: **DE ES FR GB IT**

(71) Demandeur: **Louma, Denis**
**47, rue de Curtieux**
**F-42600 Montbrison (FR)**

(72) Inventeur: **Louma, Denis**
**47, rue de Curtieux**
**F-42600 Montbrison (FR)**

(54) **Dispositif constituant une tour de réfroidissement à pression d'air.**

(57) Il est constitué d'un réservoir (7), d'une cheminée (l2) et d'un chapeau pyramidal (4), mû par un moteur (3) actionnant les turbines air/eau (2 - l). L'eau refroidie inonde 2/3 du réservoir (7), la pompe (l) l'aspire pendant que la turbine d'air (2) souffle à l'intérieur dans la partie vide du haut du réservoir (7), l'air montant en pression dans la cheminée refroidit l'eau qui déferle du haut sur les alvéoles ; l'air est freiné au sommet par les chicanes (15) condensant l'excès d'humidité avant évacuation.

Le dispositif est particulièrement réservé au refroidissement des batteries de condensation et de tous les appareils utilisant l'eau courante pour se refroidir.

Fig. 1

Bundesdruckerei Berlin

## Description

Dispositif constituant une tour de refroidissement à pression d'air

La présente invention concerne un dispositif pour le refroidissement de l'eau appelé tour de refroidissement à pression d'air.

Elle est applicable à des installations ne nécessitant qu'un débit d'eau relativement faible, du genre des machines de nettoyage à sec utilisées dans les pressings : elle n'est donc que très peu encombrante 50 X 90 cm et très légère 35 kgs, son aménagement est possible dans tous locaux sans difficulté, son fonctionnement est silencieux. Elle n'est donc pas comparable à des installations utilisées pour le refroidissement de l'eau, par exemple dans des générateurs électriques, qui sont elles aussi appelées tours de refroidissement, mais qui constituent bien souvent un ensemble ayant une masse de plusieurs tonnes (brevets EP-A-O 096110 et EP-A-O 081664) dont l'installation ne peut se faire qu'extérieurement ou dans des locaux spécialement aménagés.

D'autres tours, généralement métalliques fonctionnent à l'aide de pompes à eau à haute pressions (environ 10 kgs/CM$^2$). de façon à former, par des gicleurs très fins, une bruine formant brouillard. Cette bruine est brassée par un ventilateur qui provoque une évaporation très importante. C'est ainsi qu'est obtenu "le froid". Pour ce système de fonctionnement, il est impératif que le ventilateur soit à faible pression pour ne pas pousser la bruine à l'extérieur de la tour, mais de là découle l'obligation d'avoir une évacuation de chaleur présentant une surface la plus importante possible de façon à ce que l'échange soit suffisant tout en limitant le plus possible l'effet de courant d'air. C'est ainsi que ces tours ont généralement le haut de leur partie de cheminée ouvert sur toute la surface (en-dessus des gicleurs) et aménagé de chicanes très rapprochées formant genre de nid d'abeilles (brevets no GB.A 1430401 et GB.A. 937 830). Leur fonctionnement est très bruyant à cause de la résonnance sur les tôles formant les parois, et malgré tout, les rejets chauds sont bruineux et mouillants : on doit donc installer ces appareils à l'extérieur ou bien dans des locaux très ventilés, car il n'est pas possible de regrouper les rejets à la sortie de la tour par un chapeau rétrécissant, et de les évacuer par un conduit car ceci provoquerait un freinage qui entrainerait un mauvais rendement, voire un non fonctionnement de l'installation, puisque le flux d'air crée par le ventilateur à pales ou à hélice, n'est pas laminaire, mais constitue plutôt un brassage faisant remous (brevet no US.A.1 571253).

Le dispositif selon l'invention permet de remédier à ces inconvénients. de rendre possible l'utilisation partout où on ne le pouvait pas à cause du bruit et des rejets, de récupérer si l'on veut l'air réchauffé qui a servi au refroidissement de l'eau et poussé par sa turbine, à un recyclage intérieur domestique ou industriel, ou pour assurer une hygrométrie voulue.

Le fonctionnement se situe à peu près à l'inverse de l'exemple précédent : la circulation de l'eau se fait à basse pression (environ 1 bar) ; son écoulement dans la tour est réalisé par une rampe tubulaire perforée de trous de diamètre 2mm : ainsi il n'y a plus un brouillard mais de grosses gouttes qui déferlent pour former un film d'eau sur une pile de plaques alvéolaires assez haute (environ 1 mètre). Contrairement aux ventilateurs décrits dans les brevets antérieurs (US 1571 253 et GB 937 830) qui sont constitués par des pales ou une hélice, le ventilateur, selon l'invention, réalisé sous forme de turbine centrifuge afin de fournir un flux d'air puissant sous une pression importante, fait circuler de l'air pris à l'extérieur de bas en haut des plaques, c'est-à-dire à l'inverse du cheminement lent de descente de l'eau ; le ventilateur produit donc un courant d'air sous pression importante, sans bruit ni vibration, qui s'évacue par le haut de la tour, après avoir traversé un chapeau pyramidal qui coiffe celle-ci. L'évacuation se fait par un tube de même diamètre que l'entrée du ventilateur (environ 100 mm) sous forme d'un fort flux d'air, entrainant avec lui la chaleur chargée d'une légère humidité. L'eau est ici refroidie pour une faible part par sa propre évaporation, mais surtout par la grande quantité d'air qui la lèche durant son ruissellement au travers des plaques alvéolaires.

La tour est constituée par assemblage de deux parallélipipèdes : l'un est base "réservoir", l'autre "cheminée" placé au-dessus perpendiculairement au petit côté. Cette disposition permet de trouver sur le devant du "réservoir" place pour le support du "groupe moteur" turbines eau et air ; dans la cheminée le rangement d'alvéoles plastiques multipliant la surface refroidissante ; au sommet l'élément "chapeau pyramidal" par où arrive l'eau à refroidir et à l'orifice duquel sort l'air en pression pour être évacué ou recyclé.

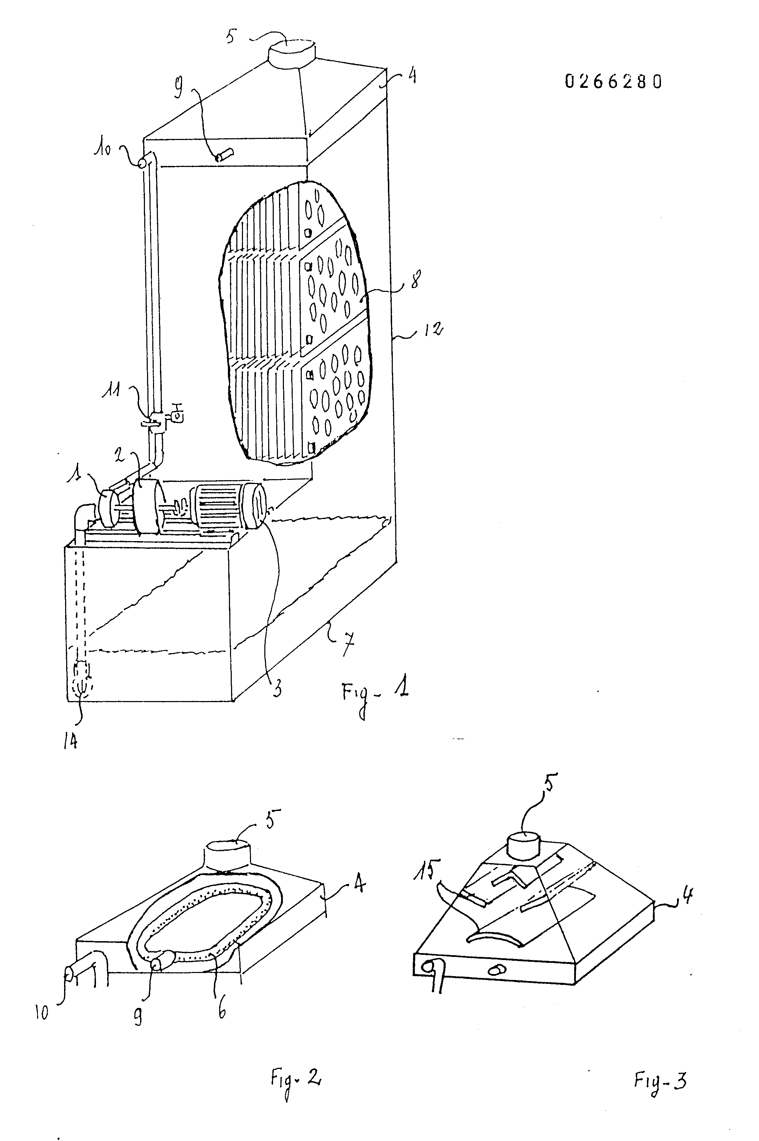

Le dispositif selon l'invention constitue une tour de refroidissement à pression d'air, destinée à équiper des machines à faible débit d'eau, c'est-à-dire semi-industrielles, rarement installées dans des locaux spéciaux, comportant (figure 1) un réservoir d'eau (7), une cheminée (12) garnie de plaques alvéolaires perforées (8), assemblées sur des cadres superposés formant échangeur, une rampe d'arrosage (6) de l'échangeur (figure 2), une pompe à eau (1), un ventilateur d'air (2),(figure 1), le dispositif selon l'invention est caractérisé en ce que le ventilateur est une turbine centrifuge et en ce que le chapeau (figure 3) est de la forme d'une pyramide (ou d'un cône) tronquée en son sommet, permettant une évacuation de l'air réchauffé par un trou cylindrique tubulaire (5), permettant une liaison à un conduit directionnel et la récupération de l'air chaud et humide rejeté par la pression de la turbine d'air. Le "réservoir" est obtenu par découpage pliage dans une feuille de matière plastique puis soudage des côtés en laissant sur le dessus un vide pour recevoir la "cheminée", un rebord plein pour supporter le "groupe moteur".

La cheminée" est obtenue par découpage et pliage dans une feuille de matière plastique puis par soudage sur la longueur, elle est montée sur le vide du "réservoir" par soudage. A l'intérieur sont disposés les rangs de feuilles alvéolées moulées en plastique. Sa hauteur et son volume sont variables suivant l'importance du volume d'eau à refroidir. Ainsi sont liés "largeur de la cheminée" (c'est-à-dire surface des plans horizontaux à l'intérieur de celle-ci) et "débit d'air du ventilateur", afin de ne pas modifier la pression de l'air. De même sont liés "hauteur de la cheminée" (c'est-à-dire nombre de plaques alvéolaires superposées) et "débit d'eau de la rampe d'arrosage", afin de ne pas modifier la quantité d'eau par plaque alvéolaire.

Les rangs sont obtenus en disposant les feuilles alvéolées perforées et moulées sur un cadre tubulaire plastique soudé, telles les alvéoles dans une ruche d'abeilles.

Le "chapeau pyramidal" au sommet de la "cheminée" est obtenu par découpage et pliage dans une feuille de matière plastique puis par soudage des côtés entre-eux.

La forme est celle d'une pyramide dont on a coupé la pointe pour laisser apparaître une surface plane horizontale, c'est dans celle-ci que se trouve l'orifice de rejet de l'air réchauffé. Cet orifice est aménagé d'un départ tubulaire pour permettre une liaison à un conduit qui emmènera l'air là où l'utilisateur le désirera. La base de la pyramide a les dimensions du haut de la tour, ce qui permet les liens par une soudure. A l'intérieur, à la base de la pyramide, la production d'une multitude de jets d'eau est obtenue en disposant tout autour une rampe tubulaire perforée en plastique soudé avec un orifice extérieur permettant l'arrivée d'eau.

La perforation est faite de manière à ce que les jets d'eau tombent sur les range d'alvéoles perforées multipliant de la sorte la surface refroidissante et dont le déferlement est ralenti par la colonne d'air montant en pression.

Au dessus de cette rampe sont disposés des bandes de plastique formant chicane : une juste au-dessus de la rampe perforée,traversant la base de la pyramide d'une face à une autre en leur milieu ; deux autres parallèles à la première, mais appliquées au-dessus contre les deux faces qui ne la portent pas ; une dernière au-dessus des deux précédentes superposée par rapport à la première. La première bande est rectiligne sur sa longueur, mais légèrement incurvée vers le haut sur sa largeur. La seconde et la troisième sont identiques et planes, disposées perpendiculairement aux faces de la pyramide qui les supportent. La quatrième est rectiligne sur sa longueur, mais en forme d'accent circonflexe sur sa longueur.

Le dispositif freine légèrement la sortie de l'air en condensant l'excès d'humidité qu'il contient et en rejetant vers le bas, les gouttes qui pourraient être entraînées par le courant d'air. La sortie finale est cylindrique et permet de recevoir un conduit d'évacuation.

Le "groupe moteur" est mû sans bruit par un seul moteur, un arbre unique relie la turbine d'eau et la turbine d'air qu'il traverse de part en part et vient s'accoupler au moteur au moyen d'un raccord souple. L'ensemble est conçu sur un bâti solidaire plastique qui vient s'adapter sur le rebord du "réservoir" prévu à cet effet.

La turbine d'eau est reliée par un tuyau plastique à un clapet de retenu filtrant qui plonge dans l'eau refroidie qui inonde les deux tiers du "réservoir".

La turbine d'air souffle dans la partie du haut du "réservoir" ; elle est reliée à ce dernier par bride.

La turbine d'eau est exécutée en plastique découpé soudé elle assure un grand débit d'eau à faible pression.

La turbine d'air est exécuté en plastique découpé soudé elle assure une pression d'air suffisante qui peut servir au recyclage de l'air plus chaud produit et assurer aussi une hygrométrie voulue. Cette pression peut varier suivant l'importance des dimensions de la tour de refroidissement dans son ensemble.

L'exécution du "groupe moteur" turbine air/eau accouplées présente une économie matérielle et énergétique.

Les dessins annexés illustrent l'invention :

La figure I représente le dispositif selon l'invention : la tour de refroidissement.

La figure 2 représente un détail de ce dispositif, la rampe tubulaire perforée en plastique soudée à l'intérieur à la base du "chapeau pyramidal".

La figure 3 représente un autre détail de ce dispositif les chicanes incurvées formant condenseur.

L'appareil décrit ici est donc destiné à recycler l'eau qui sert à refroidir certains appareils.

En effet, bien souvent, des machines, telles celles qui sont utilisées dans le nettoyage à sec, ont un système de refroidissement qui fonctionne grâce à une circulation d'eau froide :
l'eau est amenée directement du robinet du réseau urbain, refroidit par son passage l'appareil en question, et va se jeter à l'égout une fois qu'elle s'est réchauffée. La tour de refroidissement permet de réaliser la même chose, mais l'eau se trouve alors en circuit fermé : elle est captée dans le réservoir de la tour, par la pompe, qui l'envoie dansl'appreil qu'il faut refroidir, puis revient à la tour qui lui retire sa chaleur avant de retourner de nouveau dans le réservoir.
C'est ainsi que l'on peut supprimer des problèmes tels que l'entartrement des canalisations, puisque c'est pratiquement toujours la même eau qui circule.

Dans la forme de réalisation selon la figure I le "groupe moteur" (3) reçoit la turbine d'air (2) qui souffle à l'intérieur du "réservoir" (7) accouplée à la turbine d'eau (I) qui aspire l'eau par la crépine (I4) pour l'amener à la sortie (I0) en passant par un robinet de purge (II) du réseau refroidi, qui retourne son eau au "réservoir" (7). Ce même robinet de purge est pourvu d'un robinet d'arrivée d'eau du secteur pour le remplissage du réservoir (7) ainsi que pour l'amorçage de la turbine (I). Le niveau d'eau dans le "réservoir" (7) est visualisé par l'emploi d'un plastique translucide. Pendant le fonctionnement de la tour l'air est en pression dans le "réservoir" (7) autant que dans la "cheminée" (I2) et le "chapeau pyramidal" (4), il s'évacue par l'orifice cylindrique (5). Les dimensions de la tour peuvent varier, celles représentées sur la figure I sont :

longueur 90 Cm - largeur 48 cm - hauteur l90 cm, la tablette qui reçoit le "groupe moteur" se trouve à 50 cm de hauteur et mesure 48 cm de largeur et profondeur. L'entrée (9) et la sortie (l0) d'eau ont un orifice de 33 m/m. La puissance du moteur est de 736 W. L'ensemble est léger, la densité du matériau plastique choisi est de 0,92 la tour dans les dimensions données pèse à vide 35 kgs ce qui la rend très maniable.

Les pièces obtenues par pliages et soudages sont également obtenues par emboutissage ou moulage. Les arrêtes vives peuvent alors être arrondies et ainsi la forme pyramidale du chapeau peut devenir cônique.

Le dispositif selon l'invention est particulièrement réservé pour le refroidissement des batteries de condensation en particulier des machines de nettoyage à sec et tous les appareils utilisant une circulation d'eau pour leur refroidissement dans une limite d'une dizaine de mètre cubes heure environ.

## Revendications

I - Dispositif constituant une tour de refroidissement à pression d'air destinée à équiper des machines à faible débit d'eau, c'est-à-dire semi-industrielles, rarement installées dans des locaux spéciaux, comportant un réservoir d'eau (7), une cheminée (l2) garnie de plaques alvéolaires perforées (8) assemblées sur des cadres superposés formant échangeur, une rampe d'arrosage (6) de l'échangeur, une pompe à eau (l) et un ventilateur d'air (2) caractérisé en ce que le ventilateur est une turbine centrifuge et en ce qu'un chapeau ayant la forme d'une pyramide tronquée en son sommet (4) permet une évacuation de l'air réchauffé par un trou cylindrique tubulaire (5) permettant une liaison à un conduit directionnel et la récupération de l'air chaud et humide rejeté par la pression de la turbine d'air.

2 - Dispositif selon la revendication I comportant une turbine d'air centrifuge (2) qui crée un fort courant d'air dans la tour à l'inverse du sens d'écoulement de l'eau, comportant une pompe à eau (I) "basse pression" (Ibar) qui crée, grâce à la rampe perforée, de grosses gouttes qui déferlent sur l'échangeur (8), caractérisé par un aménagement de chicanes (15) formant condenseur au dessus de la rampe (6) perforée d'arrivée d'eau, à l'intérieur du chapeau pyramidal (4).

3 - Dispositif selon l'une des revendications précédentes caractérisé par une disposition des chicanes (l5) ne limitant pas la sortie de l'air, grâce à la superposition de celle-ci en quinconce sur trois étages : le premier comportant une seule chicane rectiligne incurvée sur sa largeur, le second comportant deux chicanes légèrement dirigées vers le bas et couvrant la surface laissée libre de chaque côté de la première, tout en laissant un espace pour le passage d'air entre les deux étages et le troisième étage comportant une chicane rectiligne en forme d'accent circonflexe sur sa largeur, parfaitement superposée à celle du premier étage, laissant toujours le passage pour l'air par rapport au second étage.

0266280

Fig. 1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | EP-A-0 096 110 (CERAMIC COOLING TOWER CO.) <br> * En entier * <br> --- | 1 | F 28 C 1/02 // <br> D 06 F 43/00 |
| Y | NL-A-8 006 150 (D'HOOGE) <br> * En entier * <br> --- | 1 | |
| D,Y | GB-A-1 430 401 (ENGINEERING CORP.) <br> * Colonne 3, lignes 60-64 * <br> --- | 1 | |
| A | FR-A- 650 633 (THEISEN'S NACHLASS) <br> * En entier * <br> --- | 2,3 | |
| D,A | US-A-1 571 253 (FISHER) <br> * En entier * <br> --- | 2,3 | |
| D,A | EP-A-0 081 664 (KENNECOTT CORP.) <br> * En entier * <br> ----- | 1 | |

DOMAINES TECHNIQUES RECHERCHES (Int. Cl.4)

F 28 C
D 06 F

Le présent rapport a été établi pour toutes les revendications

| Lieu de la recherche | Date d'achèvement de la recherche | Examinateur |
|---|---|---|
| LA HAYE | 06-01-1988 | SMETS E.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)